# EUROPEAN PATENT APPLICATION

(11) **EP 3 457 363 A1**
(43) Date of publication of application: **20.03.2019**
(21) Application number: 18194941.3
(22) Date of filing: 17.09.2018
(51) Int. Cl.: G06T 19/00, G06T 15/50

(54) **METHOD AND SYSTEM FOR DISPLAYING PRIORITY INFORMATION IN A VEHICLE**

(30) Priority: 15.09.2017 ES 201731120
(71) Applicant: Seat, S.A., 08760 Martorell (ES)
(72) Inventor: MORENO PAREJO, Alejandro, 08760 Martorell, Barcelona (ES)
(74) Representative: Elzaburu S.L.P.

(57) **Abstract**

Method, and associated system, for displaying priority information in a vehicle (1), which comprises the following steps: i) capturing at least one first image (51) of a field of vision (22) of the user (2), ii) obtaining an item of information on an environment of the vehicle (1), iii) determining a critical driving situation, iv) capturing at least one second image (52) of the environment of the vehicle (1), v) generating a virtual environment (6) of the user (2), in which the virtual environment (6) generated is based on the critical driving situation determined, and vi) displaying the virtual environment (6) generated by means of the virtual reality device (3). It is possible to replace the rear view mirrors with cameras (14, 36) and with virtual reality devices (3) for displaying virtual reality, combined with real information, so as to increase the versatility of the information presented to the user (2) as regards the area outside (12) the vehicle (1).

## Description

### SUBJECT MATTER OF THE INVENTION

The present patent application relates to a method for displaying priority information in a vehicle, according to Claim 1, which incorporates notable innovations and advantages, along with a system for displaying priority information in a vehicle, according to Claim 14.

### BACKGROUND OF THE INVENTION

These days, vehicles have cameras that capture images with information on the environment, in particular the area outside the vehicle, such as the area at the rear the vehicle. This information, which is important for the user of the vehicle, may be processed and displayed by means of a virtual reality device.

The known solution for improving the vehicle driver's view of the area at the rear of the vehicle involves the use of cameras and additional screens, which entails additional costs, as well as the need to reserve spaces for the screens and the fact that said screens occupy fixed spaces inside the vehicle.

Moreover, the display in the HUD (Head Up Display), which displays information on the windscreen, of the images captured by cameras facing outward from the vehicle, in particular towards the rear, involves a reduction in quality, since the space for display is limited. Furthermore, it adds to the cost of the system.

In this regard, as can be seen from US20160379411, the prior art includes a method and system for providing information to a driver of a vehicle, which allows the driver to drive the vehicle more safely. Said information is displayed to the driver as an augmented reality environment, such that the driver can see, on screens arranged inside the vehicle, images of the area outside the vehicle that help his driving and surveillance of the external environment. These screens may be arranged in the place of an outer rear view mirror on the side of the vehicle or a central rear view mirror of the vehicle. This offers the possibility of displaying augmented reality information that is important for the driver, thereby improving safety. Unlike the present invention, the screens are fixed and located in the same place as the current rear view mirrors.

Therefore, in light of all of the above, there is clearly still a need to have a method and system for displaying priority information in a vehicle, in particular the area outside the vehicle, in such a way that images and information are displayed clearly, without interfering with other images and information present in the field of vision of the user, according to the importance and priority level thereof at any time during driving, thereby optimizing the display of important information at the right time.

### DESCRIPTION OF THE INVENTION

The present invention consists of a method and system for displaying priority information in a vehicle, by means of a virtual reality device, in which images with important information are displayed to the user, framed within his field of vision. Preferably, the virtual reality device will consist of virtual reality glasses, or another equivalent system.

Thus, to enjoy the advantages of the present invention, the user must position the virtual reality glasses so that he can see the environment through the virtual reality images displayed to him by means of said device. In other words, the user does not view the environment directly, but sees everything through, in this case, the virtual reality glasses. The virtual reality device preferably comprises at least one camera that captures the user's viewpoint, displaying to the user the image from said at least one camera. Before displaying the content of the image captured by the camera, the system processes said image, along with image (s) from one or more other cameras of the vehicle. This at least one camera preferably faces outwards from the vehicle, and is in particular focused on the area at the rear of the vehicle. It is thus possible to detect a critical driving situation that may represent a risk of collision, displaying to the vehicle driver user an important image or information, warning him of said risk.

Note that the function of displaying the information in the virtual reality device itself allows a greater degree of freedom in the display of images than when they are displayed on at least one fixed screen of the vehicle. It is thus possible to display images more noticeably and with greater versatility, the user not being confined to looking at a specific area of the vehicle, such as the rear view mirror, thus avoiding the need to take his eyes off the road. Moreover, there is a cost saving in terms of screen infrastructure.

In essence, the method of the present invention comprises the following steps:
- capturing information by means of cameras in the rear, side and/or front area of the vehicle;
- capturing information by means of at least one internal camera that captures the field of vision of the driver;
- processing the information recorded by the at least one internal camera, classifying the pixels of the image as pertaining to the passenger compartment, outside and/or additional objects;
- processing information from cameras and/or sensors external to the vehicle to detect critical driving situations;
- detecting a risk of collision;
- generating a virtual image based on the information recorded by the at least one internal camera, by the information recorded by the external camera or cameras, as a function of the risk of collision detected;
- displaying the virtual image on the screen of the virtual reality device.

To be specific, the invention consists in a method for displaying priority information in a vehicle, in which a virtual reality device is used by a user inside the vehicle, in which the method comprises the steps of:
i) capturing at least one first image of an environment of the user, in which the at least one first image captured coincides with a field of vision of the user,
ii) obtaining an item of information on an environment of the vehicle,
iii) determining a critical driving situation on the basis of the information obtained on the environment of the vehicle,
iv) capturing at least one second image of the environment of the vehicle,
v) generating a virtual environment of the user, in which the virtual environment comprises the at least one first image captured and the at least one second image captured, in which the virtual environment generated is based on the critical driving situation determined, and
vi) displaying the virtual environment generated by means of the virtual reality device.

Thus, the invention relates to a method and an associated system for preventing collisions such that, when a risk of collision is detected, information for preventing the collision is displayed in the virtual reality device, preferably virtual reality glasses, thereby increasing the safety of the occupants of the vehicle.

To be specific, the information displayed in the virtual reality device consists principally of the images captured by cameras external to the vehicle, so as to provide the driver with a broader view of the rear, side or front area of the vehicle, in the instant in which a risk of collision is detected. The images may thus be displayed only when the danger appears, giving at the same time the relevant information to enable the user to take driving decisions and prevent the collision, or minimize the risk.

"Critical driving situation" means an event in the environment, an action by the driver, an action by a third vehicle or pedestrian in relation to the vehicle, etc. in which the method determines that this information is priority and must be displayed to the driver of the vehicle. For example, there may be a second image of the side of the vehicle that shows a blind spot occupied by a third vehicle, or a second image that amplifies a traffic signal being ignored, or a second image received through a wireless connectivity system, in which the second image shows an accident or traffic hold-up that has occurred ahead of the vehicle.

Note that the collision risk situation may be detected by means of any currently available driver assistance system, such as lane change assist, parking assist or blind spot assist, as well as communication systems such as vehicle to vehicle communication ("car 2 car") or vehicle to infrastructure communication ("car 2 X") . These are non-limiting examples, and other data-input devices or elements or sensors may be added.

It must also be specified that the external images of the vehicle are displayed on the virtual reality device with such and such a property depending on the degree of urgency, priority or level of collision risk. Thus, first images are captured that coincide with the user's field of vision or the direction in which the user is looking. For example, if, according to the cameras and sensors, a vehicle in the blind spot poses a high risk of collision, this second image or only the relevant part of this second image will be displayed in the virtual reality device. By contrast, if the risk of collision is deemed to be low, the image of said vehicle will be displayed discreetly, or alternating with other information.

To display the priority information efficiently and in a manner that is practical for the user, a virtual environment is generated. "Virtual environment" means the space surrounding the user of a virtual reality system, generated on the basis of captured first images of the real environment, in which said first images may be processed beforehand. Moreover, second images may be superposed or added, depending on how the critical driving situation is evaluated. Such superposition is performed taking into account a number of parameters of the first and second images, according to the danger posed by the critical driving situation determined. Said properties may consist in varying the position of the second image on the screen of the virtual reality device, the intensity of the second image, the degree of transparency thereof, whether it is near or far away, the size thereof, etc. Thus, for example, the greater the risk, the bigger and more intense it will be, its position more centred, and the more it will be superposed with respect to the at least one first image of the user's environment.

Optionally, the user may select the position of the second images corresponding to the external camera, in the part of the field of vision that is most convenient, while staying within safety margins. The user may also select the size of the image, again staying within safety margins. Both the size and the position of the image may change automatically through any action or event during driving. For example, the size of the second image may be increased when the user activates the indicator, it being understood that the driver is preparing to change lanes, and will need to see if there are any vehicles to the rear.

Additional advantages include the fact that the virtual reality device, preferably virtual reality glasses, represents a cost saving over the option of incorporating additional screens in the passenger compartment of the vehicle. Moreover, as it is a virtual display, it does not require that any physical space be set aside within the passenger compartment of the vehicle. And as stated above, it is flexible, in that the user may modify the position and size of the image as a function of factors of driving or user preferences.

According to another aspect of the method of the invention, the step of generating a virtual environment comprises superposing the at least one second image on the at least one first image. Superposing a second image on a first image means superposing the at least one fragment of the second image on at least one fragment of the first image. As a variant, there could be the option of replacing a fragment of the first image with at least one fragment of the second image, rather than superposing. The advantage of such superposition or replacement between images is an increase in the versatility of the information that is displayed to the user of the vehicle, while at the same time information may be modified and combined, i.e. it is not at all necessary to choose between displaying the second image at the risk of hiding the first image.

More particularly, the step of generating a virtual environment comprises changing a colour, brightness, luminosity, contrast and/or saturation of the at least one second image. Thus, it is possible to display the images differently in driving situations with different levels of danger and risk. For example, the present invention makes it possible to increase or reduce the importance with which the second image is displayed in the virtual environment generated, so that if the priority level of the information is determined as critical, the degree of transparency of the second image is reduced. On the other hand, if the priority level of the information is determined as not very critical, the degree of transparency of the second image is increased.

Advantageously, the step of generating a virtual environment comprises changing a colour, brightness, luminosity, contrast and/or saturation of the at least one first image, in order to emphasize and highlight the importance of the second image. Optionally, it is also possible to partially modify the first image in the area in which the second image is superposed so that the second image stands out and is seen more clearly, without any type of distortion or interference.

According to another aspect of the invention, the step of generating a virtual environment comprises defining a dimension of the at least one second image, so that it is possible to establish the size with which said second image will be displayed in the virtual reality device based on the priority level of the critical driving situation determined.

In a preferred embodiment of the invention, the step of generating a virtual environment comprises incorporating at least one item of additional virtual information, in which the additional virtual information is incorporated into the at least one first image and/or into the at least one second image, so that the user of the vehicle may have additional information such as augmented reality, it being possible, for example, to modify the colour of an outline of a third vehicle with respect to which there is a critical driving situation, or to add to the first or second image information on the speed of a third vehicle, etc.

To be specific, the method of the invention comprises a step of determining the field of vision of the user, in which the step of generating a virtual environment comprises establishing a position of the at least one second image in the virtual environment based on the field of vision of the user determined. Thus, the position of the additional information may be adjusted to the type of information in question, and the driving requirements, based on how critical the situation determined is. Thus, if the priority level is low, the second image is superposed on an area of the first image of little importance, such as a corner or side of the field of vision of the user. On the other hand, if the priority level is high, the second image is superposed on a central area of the field of vision of the user.

Moreover, establishing the position of the at least one second image comprises moving the position of the second image in the virtual environment in line with a change in the field of vision of the user determined, such that the second image stays superposed on the first image, whether or not the field of vision has changed. Thus, the second image is always visible and perceptible. Therefore, if the user turns his head and changes the field of vision, the second image modifies the position in the virtual environment in line with the change in the field of vision of the user, so that the second images is always visible.

According to another embodiment of the invention, establishing the position of the at least one second image comprises keeping the position of the at least one second image fixed in the virtual environment. Thus, a change in the field of vision of a user determined does not affect the position of the second image in the virtual environment. Consequently, said second image may disappear from the virtual environment displayed to the user, being visible only when the user's field of vision is facing the area where the second image is fixed.

Note that the position of the second image is seen as fixed in space, i.e. if the image is located in the driver's side window, it always appears at this point, even if the user moves his head. If said movement is, in particular, to the right, to look at the passenger, and exceeds a predetermined angle of turning, the image disappears from his field of vision. According to another aspect of the invention, the at least one first image comprises at least one first segment, in which the method comprises a step of classifying the at least one first segment of the at least one first image as pertaining to the interior of the vehicle, or as pertaining to the area outside the vehicle, or as corresponding to an additional object of the vehicle.

"First segment" means a portion or a part of an image. The subdivision of an image into portions or first segments may be performed by image processing, dividing the image according to colour, volume, geometry, outline, etc., thereby obtaining the plurality of first segments that make up the image. Alternatively, the image may be subdivided by pixels or the like. Thus, the term "segment" of an image is equivalent to pixel of said image, and they are interchangeable, both meaning the same thing.

Thus, the system that implements the method of the present invention divides the images into three parts, so that it can process the correct part, classifying the pixels as corresponding to the passenger compartment, i.e. the vehicle interior, as corresponding to the area outside the vehicle, in particular the area corresponding to the window panes, and as corresponding to additional objects, not forming part of the passenger compartment, such as parcels, passengers or parts of the body of the user who is wearing the virtual reality device.

Furthermore, "virtual environment" means the space surrounding the user of a virtual reality system, generated on the basis of captured images of the real environment, in which said captured images may be processed beforehand. Thus, just as a captured image of the environment comprises at least one first segment, the virtual environment comprises at least one virtual segment, "virtual segment" meaning the subdivision, portion or part of the virtual environment. Thus, the term "segment" of an image is equivalent to pixel of said image, and they are interchangeable, both meaning the same thing.

According to another aspect of the invention, the step of classifying the at least one first segment is based on a location of at least one element of the environment of the user with respect to the virtual reality device, in which the method further comprises the steps of:
a) obtaining at least one real vector, in which the at least one real vector comprises a modulus and a direction between the virtual reality device and the at least one element of the environment of the user,
b) determining a position of the virtual reality device in the vehicle,
c) assigning the at least one real vector to the at least one first segment, and
d) comparing the at least one real vector with at least one theoretical vector, in which the at least one theoretical vector is already known. Subsequently, the at least one first segment of the at least one image is classified and labelled as pertaining to the interior of the vehicle, outside the vehicle or additional object of the vehicle, based on the comparison of the at least one real vector with the at least one theoretical vector.

Furthermore, the at least one theoretical vector is based on a layout of the vehicle passenger compartment and on the position of the virtual reality device in the vehicle, in which the layout of the vehicle passenger compartment is already known. Note that the layout of the vehicle passenger compartment is like a 3D (three-dimensional) map of the interior, such that knowing the position of the virtual reality device in said 3D map, all the theoretical vectors between the virtual reality device and the at least one element of the environment are known.

Moreover, the method of the invention comprises an additional step of determining at least one window zone in the at least one captured image, in which the step of determining the at least one window zone comprises recognizing at least one predefined geometric shape by means of image processing and/or determining at least one marker on the at least one image, in which the marker comprises a predefined colour, and/or comparing the at least one real vector with the at least one theoretical vector. In a preferred embodiment, there may be means for facilitating the position of the glazed panes or window zone, such as window frames painted in a predetermined colour and determined by means of a step of processing the at least one captured image of the user's environment.

As stated above, the window zone corresponds to the windscreen as glazed or transparent surface, as well as to the side windows and rear window of the passenger compartment. Note that if in the comparison between the real vector and the theoretical vector, both angles and moduli coincide, this first segment is thus defined as equivalent to the window zone.

Based on the above, it is specified that the at least one first segment is classified as outside the vehicle if the at least one first segment is arranged in the at least one window zone in the at least one image.

Moreover, the at least one first segment is classified as pertaining to the interior of the vehicle if the real vector of the at least one first segment is substantially equal to the theoretical vector, in that both the angle and the moduli of the vectors coincide. It is stressed that, in this case, the theoretical vector is not defined as the window zone.

Furthermore, the at least one first segment is classified as pertaining to an additional object of the vehicle if the modulus of the real vector of the at least one first segment is less than the modulus of the theoretical vector.

In a particular embodiment of the invention, the step of determining a position of the virtual reality device in the vehicle comprises determining a location of the user's head by means of image processing and/or determining a location of at least one point of reference of the virtual reality device by means of image processing and/or determining a location of the virtual reality device by means of triangulation and/or determining a location of the virtual reality device by means of at least one inertial system provided in the virtual reality device.

According to another particular aspect of the invention, the step of generating a virtual environment of the user is also based on the classification of the at least one first segment of the at least one first image. Moreover, properties such as brightness, position and dimension also depend on said classification of the first segment.

In a specific embodiment of the invention, the at least one second image comprises at least one second segment, in which the step of superposing the at least one second image on the at least one first image comprises superposing the at least one second segment of the second image on the first segment pertaining to the interior of the vehicle and/or on the first segment pertaining to the area outside the vehicle and/or on the first segment pertaining to an additional object of the vehicle. Thus, the superposition of the second image is adjusted in terms of its properties taking into account the part of the field of vision to which said first segment corresponds. Thus, if a critical driving situation is determined as low priority, the at least one second image may be superposed only on the segments of the first image that are classified as pertaining to the interior of the vehicle. On the other hand, if a critical driving situation is determined as high priority, the at least one second image may be superposed on the segments of the first image classified as pertaining to additional objects of the vehicle, or even the segments of the first image classified as pertaining to the area outside the vehicle.

According to another aspect of the invention, the step of moving the position of the second image in the virtual environment comprises superposing the at least one second segment of the second image on successive first segments pertaining to the interior of the vehicle and/or on successive first segments pertaining to the area outside the vehicle and/or on successive first segments pertaining to an additional object of the vehicle. Thus, movement of the second image is adjusted in terms of its position taking into account the part of the field of vision to which said first segment corresponds, and the second image is not superposed on segments with a higher priority than said second image itself, such as the area outside the vehicle.

The present invention also relates to a system for displaying virtual reality information in a vehicle, in which the system comprises:
- a virtual reality device, in which the virtual reality device comprises at least one screen,
- at least one first camera, in which the at least one first camera is configured to capture at least one first image, in which the at least one first image coincides with a field of vision of the user,
- at least one sensor means, in which the at least one sensor means is configured to obtain information on an environment of the vehicle,
- at least one second camera, in which the at least one second camera is configured to capture at least one second image of an environment of the vehicle, and
- at least one processing unit, in which the at least one processing unit is configured to determine a critical driving situation based on the information on the environment of the vehicle, and to generate a virtual environment of the user, in which the virtual environment comprises the at least one first image captured and the at least one second image captured, in which the virtual environment generated is based on the critical driving situation determined.

Said system has the same advantages as the method described above, in that the processing unit implements the steps thereof, in the environment of a passenger compartment of a vehicle. Thus, the virtual reality device may be worn on the head of a user of the vehicle, thus helping the virtual reality device to capture, by means of the at least one first camera, the field of vision of the user.

Preferably, and as stated above, the virtual reality device usually consists of virtual reality glasses which, in a preferred embodiment, comprise a high-resolution camera, high quality auto-focus systems, at least one night-vision and/or infrared camera and/or wide-angle lens camera, and a system capable of determining the distance to all the objects in the image, such as a LIDAR (Light Detection and Ranging or Laser Imaging Detection and Ranging), i.e. a device for determining the distance from a laser emitter to an object or surface using a pulsed laser beam. Thus, a LIDAR sensor may be arranged adjacent to the at least one first camera, so that the at least one segment of the image is paired with a real vector.

It is thus possible to detect the presence of another vehicle in the zone of the field of vision corresponding to the blind spot. When the user encroaches on another lane or activates the indicator, it may be that, irrespective of where the driver is looking, the visual information corresponding to the at least one second camera in the virtual environment of the user is displayed. The second image captured by the second camera is displayed by means of the virtual reality device, irrespective of the field of vision of the user, with a size that may vary, being transparent or non-transparent, and superposed or not superposed depending on the critical driving situation determined and/or the classification of the at least one first segment of the first image.

According to another aspect of the invention, the system comprises at least one position detection means, in which the position detection means is configured to determine a position of the virtual reality device in the vehicle. It is thus possible to ascertain the position and orientation of the virtual reality device inside the vehicle, something which can be used, for example, to classify the first image into layers, sections or segments, and also to determine the field of vision perceived by the user at any time.

It is specified that, therefore, the layout of the interior of the vehicle is already known in a preferred embodiment. This means knowing the plan or map of the interior of the vehicle and therefore the theoretical distances from each object in the environment as a function of the position occupied by the virtual reality device in the vehicle interior.

As regards the positioning and orientation system of the virtual reality device of the present invention, use may be made of one or more of the following systems:
- Cameras that record the position and orientation of the virtual reality device or glasses, based on either processing shapes of the image, for example the shape of the head, or by placing points of reference in the virtual reality device or glasses, such as a camera that only records the colour violet, the device or glasses having violet points of reference.
- Positioning through triangulation, using technologies based on electromagnetic or infrared waves. To determine the orientation, it is simply necessary to place three transmitters and/or receivers in the virtual reality device or glasses, so as to be able to determine the orientation in space. The space or passenger compartment of the environment must also have at least three transmitters and/or receivers serving as base station.
- Reference images. The passenger compartment or object may have points of reference which, when captured by the camera of the virtual reality device or glasses, determines the position and orientation of the latter.

To help with the orientation of the virtual reality device or glasses, they may have a system of accelerometers and gyroscopes.

The attached drawings show, by way of non-limiting example, a method and system for displaying priority information in a vehicle, according to the invention. Other features and advantages of said method and system for displaying priority information in a vehicle, according to the present invention, will become clear from the description of a preferred, but not exclusive, embodiment which is shown by way of non-limiting example in the attached drawings, in which:

### BRIEF DESCRIPTION OF THE DRAWINGS

Figure 1 is a perspective view of the passenger compartment of a vehicle, according to the present invention.
Figure 2 is a first-person view of the field of vision of a user from the driver's position in the passenger compartment of a vehicle, according to the present invention.
Figure 3 is a perspective view of a virtual reality device, according to the present invention.
Figure 4A is a perspective view of a virtual reality device in a first position, according to the present invention.
Figure 4B is a perspective view of a virtual reality device in a second position, according to the present invention.
Figure 5A is a perspective view of the first row of seats in the passenger compartment of a vehicle, with two users wearing their respective virtual reality devices, according to the present invention.
Figure 5B is a perspective view of the field of vision of the driver in the passenger compartment of a vehicle, according to the present invention.
Figure 6A is a perspective view of the virtual environment seen by the driver in the passenger compartment of a vehicle through the virtual reality device, with a second image in a first position in the field of vision, similar to what would be seen in a rear view mirror of the vehicle, according to the present invention.
Figure 6B is a perspective view of the virtual environment seen by the driver in the passenger compartment of a vehicle through the virtual reality device, following a first turn of the head of the driver, with a second image in a second position in the field of vision, moved with respect to the first position, according to the present invention.
Figure 6C is a perspective view of the virtual environment seen by the driver in the passenger compartment of a vehicle through the virtual reality device, following a second turn of the head of the driver, with a second image in a third position in the field of vision, and with at least one visual property changed, according to the present invention.
Figure 6D is a perspective view of the virtual environment seen by the driver in the passenger compartment of a vehicle through the virtual reality device, following a third turn of the head of the driver, with a second image in a fourth position in the field of vision, and with at least one visual property changed, according to the present invention.
Figure 7A is a perspective view of the virtual environment seen by the driver in the passenger compartment of a vehicle through the virtual reality device, with a second image in a first fixed position, similar to what would be seen in a rear view mirror of the vehicle, according to the present invention.
Figure 7B is a perspective view of the virtual environment seen by the driver in the passenger compartment of a vehicle through the virtual reality device, following a first turn of the head of the driver, with a second image in a first fixed position, according to the present invention.
Figure 7C is a perspective view of the virtual environment seen by the driver in the passenger compartment of a vehicle through the virtual reality device, following a second turn of the head of the driver, with a second image in a first fixed position, having partially disappeared from of the field of vision of the user, according to the present invention.
Figure 7D is a perspective view of the virtual environment seen by the driver in the passenger compartment of a vehicle through the virtual reality device, following a third turn of the head of the driver, with a second image in a first fixed position, having completely disappeared from the field of vision of the user, according to the present invention.
Figure 8A is a perspective view of the virtual environment seen by the driver in the passenger compartment of a vehicle through the virtual reality device, with a second image in a first position of the field of vision, similar to what would be seen in a rear view mirror of the vehicle, according to the present invention.
Figure 8B is a perspective view of the virtual environment seen by the driver in the passenger compartment of a vehicle through the virtual reality device, following a first turn of the head of the driver, with a second image in a first fixed position, according to the present invention.
Figure 8C is a perspective view of the virtual environment seen by the driver in the passenger compartment of a vehicle through the virtual reality device, following a second turn of the head of the driver, with a second image in a third position in the field of vision, and with at least one visual property changed, according to the present invention.
Figure 8D is a perspective view of the virtual environment seen by the driver in the passenger compartment of a vehicle through the virtual reality device, following a third turn of the head of the driver, with a second image in a fourth position, and with at least one visual property changed, according to the present invention.
Figure 9A is a perspective view of the virtual environment seen by the driver in the passenger compartment of a vehicle through the virtual reality device, with a second image and with additional objects of the vehicle superposed on the second image, according to the present invention.
Figure 9B is a perspective view of the virtual environment seen by the driver in the passenger compartment of a vehicle through the virtual reality device, with a second image and with the second image superposed on the additional objects of the vehicle, according to the present invention.

### DESCRIPTION OF A PREFERRED EMBODIMENT

With reference to the above figures, and following the numbering used, said figures show a preferred embodiment of the invention, which comprises the parts and elements mentioned and described in detail below.

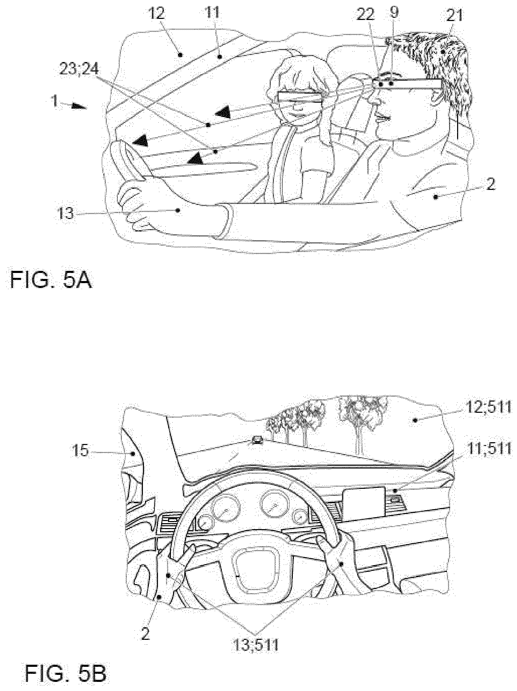

As can be seen in Figure 5A, the system and method of the present invention is based on the display of virtual reality information by means of a virtual reality device 3. The virtual reality device 3 is preferably arranged on the head 21 of the user 2, both a driver and a passenger, when they are inside a vehicle 1.

To sum up, the method of the present invention performs the following actions, in a preferred embodiment:
- captures at least one first image 51 by means of at least one first camera 31, in which the at least one image 5 coincides with the field of vision 22 of the user;
- obtains information on the vehicle environment, so that both parameters of the vehicle and information external to the vehicle are analysed, so that a critical driving situation may be determined,
- determines a critical driving situation, so that an item of priority information must be displayed in the virtual reality device 3 in preference to the at least one captured image 5,
- captures at least one second image 52, in which the at least one second image 52 displays a critical driving situation,
- generates a virtual environment 6 for the user 2, in which the virtual environment 6 comprises the first image 51 which coincides with the field of vision 22, and the second image 52, so that the critical driving situation is displayed in the user's field of vision,
- changes at least one visual property of the first image 51 and/or of the second image 52, so that the priority information displayed to the user 2 may be highlighted and positioned in line with the field of vision 22 of the user 2 and the estimated priority level of the critical driving situation, and
- displays the virtual environment 6 generated by means of the virtual reality device 3.

Note that in a first variant, the virtual environment 6 is displayed on a screen 37 of the virtual reality device or glasses 3, and in a second variant, it is displayed on the actual lens of the virtual reality device or glasses 3.

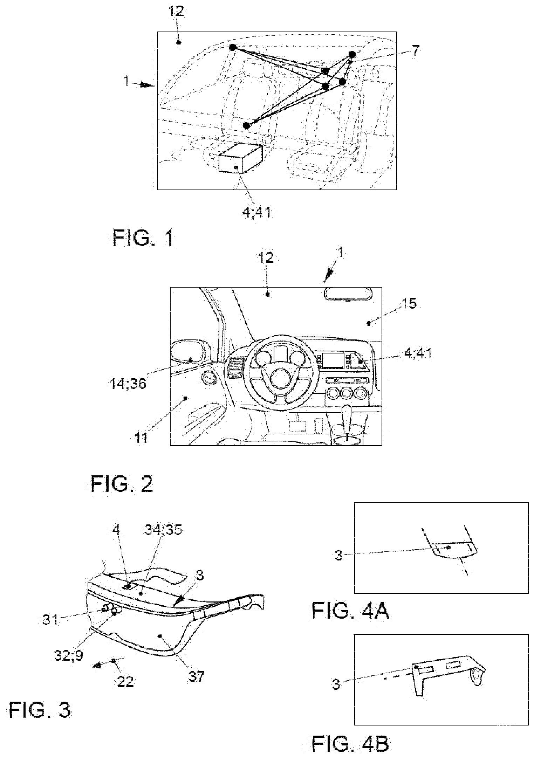

Figure 1 shows, by way of illustration, the passenger compartment of a vehicle 1, with a processing unit 4 and a memory unit 41, located preferably under the dashboard. It also shows a plurality of position detection means 7 for detecting the position of the virtual reality device 3 in the vehicle 1. One example for positioning the virtual reality device 3 is by means of transceivers, for example infrared or electromagnetic wave transceivers. Thus, by means of a process of triangulation and knowing the transmission and response time for said waves with devices located in known locations in the vehicle, it is possible to determine its position precisely.

Figure 2 shows, by way of illustration, a first-person view of the field of vision 22 of a user 2 from the position of the driver in the passenger compartment of a vehicle 1. It thus shows the position of the processing unit 4, and the memory unit 41, and the areas of the field of vision 22, classified as pertaining to the interior 11, outside 12 and window zone 15. It also shows an example of a location of a second camera 14 that obtains second images 52 of the environment of the vehicle 1, and a third camera 36, in the space usually intended for a rear view mirror.

Figure 3 shows, by way of illustration, a perspective view of a virtual reality device 3. Said virtual reality device 3 is, preferably, virtual reality glasses. The virtual reality glasses preferably comprise a first camera 31 for capturing the at least one first image 51, at least one distance sensor 9, in which the at least one distance sensor 9 is configured to obtain at least one distance between the user 2 and the objects in the environment, an accelerometer 34 and a gyroscope 35 in order to determine a position of the virtual reality device 3 in the vehicle 1, and a processing unit 4. Thus, the virtual reality device 3 knows where it is positioned, and knows the distance to each point in the passenger compartment of the vehicle 1. Furthermore, a screen 37 is used to display to the user 2 the virtual environment 6 generated.

Figure 4A shows, by way of illustration, a virtual reality device 3 in a first position, corresponding to a top view of the virtual reality glasses. Figure 4B shows, by way of illustration, a virtual reality device 3 in a second position, corresponding to a side view of the virtual reality glasses. In order to position the virtual reality device 3 in the environment, it is possible to create in the glasses markers or beacons which serve as points of reference. In Figure 4A, the markers are arranged in the top area of the glasses frame. In Figure 4B, the markers are arranged in the side area of the arms. By means of cameras arranged inside the vehicle, the position and orientation of said markers are determined, thereby positioning the virtual reality device 3.

According to another aspect of the invention, the method of the present invention classifies at least one first segment 511 of the first images 51 obtained by the first camera 31. The at least one first segment 511 is classified as pertaining to:
- the interior 11 of the vehicle 1,
- the area outside 12 the vehicle 1, and
- an additional object 13 of the vehicle 1.

Therefore, the classification of the first segments 511 is based on a location of at least one element of the environment of the user 2 with respect to the virtual reality device 3, in which the method further comprises the steps of:
a) obtaining at least one real vector 23, in which the at least one real vector 23 comprises a modulus and a direction between the virtual reality device 3 and the at least one element of the environment of the user 2,
b) determining a position of the virtual reality device 3 in the vehicle 1,
c) assigning the at least one real vector 23 to the at least one segment 52, and
d) comparing the at least one real vector 23 with at least one theoretical vector 24, in which the at least one theoretical vector 24 is already known.

Figure 5A shows, by way of illustration, a perspective view of the first row of seats in the passenger compartment of a vehicle, with two users 2 wearing their respective virtual reality devices 3, according to the present invention. It schematically shows how the virtual reality device captures first images 51 of the environment, coinciding with the field of vision 22 of the user 2. Furthermore, at least one distance sensor 9 captures at least one modulus and one direction between the virtual reality device 3 and the elements located in the environment of the user 2, so as to define a plurality of real vectors 23. Each first segment 511 of the image 5 is associated with at least one real vector 23, so as to ascertain a relative position of the at least one first segment 511 with the user 2.

Moreover, at least one position detection means 7 is used to ascertain the position of the virtual reality device 3 inside the vehicle 1. It is essential to ascertain the position to locate the user 2 in a three-dimensional map of the vehicle 1 which is already known. Thus, a plurality of theoretical vectors 24 will be ascertained, which indicate the relative position between the objects located in the environment of the user 2 and the actual user 2. A comparison between the plurality of theoretical vectors 24 and the plurality of real vectors 23 will make it possible to classify the plurality of first segments 511 or additional objects of the image 5, thereby generating a virtual environment 6 tailored to the exact needs of the user 2.

In order to determine the first segments 511 of the first image 51 that represent the area outside 12 the vehicle 1, at least one window zone 15 is determined in the at least one image 5 captured. It is based on recognizing at least one predefined geometric shape by means of image processing and/or determining at least one marker of the at least one first image 51, in which the marker comprises a predefined colour, and/or comparing the at least one real vector 23 with the at least one theoretical vector 24. To be specific, the window zone 15 corresponds to the windscreen, or any glazed or transparent surface of the vehicle 1. Thus, at least one first segment 511 is classified as pertaining to the area outside 12 the vehicle 1 if the at least one first segment 511 is arranged in the at least one window zone 15 in the at least one first image 51.

Figure 5B shows a first virtual environment 6 of the user 2 which is generated. It can be seen that this first virtual environment 6 does not have any modification with respect to the real environment of the user 2. Thus, it shows a field of vision 22 of a driver user 2 in the passenger compartment of a vehicle 1, in which the various areas of the field of vision 22 can be seen, classified as pixels or first segments 511 that correspond to the interior 11 of the vehicle 1, or passenger compartment, for example a dashboard of the vehicle 1, pixels that correspond to additional objects 13 not belonging to the interior 11 of the vehicle 1, or passenger compartment, in this case the hands of the driver user 2, and pixels that correspond to the area outside 12 the vehicle 1, i.e. the part of the first image 51 that is beyond the windscreen.

Note that the present invention classifies the pixels of the first image 511 into at least the following layers: outside 12, interior 11, and additional object 13. The layer pertaining to the outside 12 corresponds to the captured pixels that are positioned in the glazed or window zone 15. Therefore, everything that is captured and, according to the 3D layout, is indicated as glazed or window zone 15, corresponds to the outside 12, as long as the distance from this pixel is equal to the real distance. As regards the interior 11 of the vehicle 1, or passenger compartment, the real distance must coincide with the theoretical distance according to the 3D layout. As regards the additional object 13, not belonging to the interior 11 of the vehicle 1, or passenger compartment, the real distance must be less than the theoretical distance according to the 3D layout.

Based on an environment like that shown in Figure 2, in which this environment of the user 2 is captured by means of the first camera 31, a critical driving situation is detected. A critical driving situation may consist in the vehicle 1 encroaching on another lane, an imminent collision situation or contact between the vehicle 1 and a third vehicle, a third vehicle located in the blind spot of the vehicle 1 and not seen by the driver, a pedestrian close to the path of the vehicle 1, etc.

Any of these critical driving situations may be detected by means of sensors on the vehicle, such as distance sensors, presence sensors, sensors that parametrize the route of the vehicle 1, etc. When a critical driving situation is detected, a virtual environment is generated which comprises at least one second image 52 of the area outside the vehicle, superposed on the at least one first image 51.

Just as the at least one first image 51 comprises at least one first segment 511, i.e. at least one area, part or pixel of the first image 51, the at least one second image 52 comprises at least one second segment 521. Thus, superposing the at least one second image 52 on the at least one first image 51 comprises superposing the at least one second segment 521 of the second image 52 on the at least one first segment 511 of the first image. It may also mean replacing the at least one first segment 511 by the at least one second segment 521.

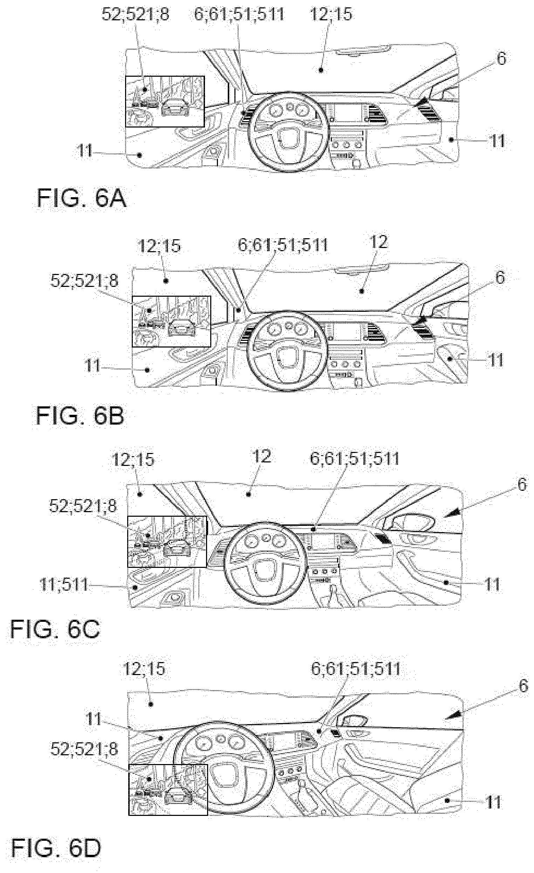

Figure 6A shows, by way of illustration, a perspective view of the virtual environment 6 seen by the driver in the passenger compartment of a vehicle 1 through the virtual reality device 3, with a second image 52 in a first position in the field of vision 22, similar to what would be seen in a rear view mirror of the vehicle. It also shows the various areas of the field of vision 22 of the user 2, which are the interior 11 and the outside 12. It shows a first image 51, with at least one first segment 511, and a second image 52, with at least one second segment 521. The virtual environment 6 comprises at least one virtual segment 61.

As the vehicle 1 has encroached on a lane to the left, and as a third vehicle is travelling in this left-hand lane, a critical driving situation has been determined. Therefore, the second image 52 is displayed in the virtual environment 6 so that the user 2 receives priority information on a critical driving situation. In this case, the second image 52 shows an external image 8 of the vehicle 1, in particular what would be seen in a rear view mirror. This represents a driving aid since, when the driver changes lane, he normally looks in the rear view mirrors.

It can be seen that the second image 52 of the area outside 12 the vehicle 1 displayed in the virtual reality device 3 occupies a predetermined position depending on the level of priority of the critical driving situation. Thus, the second image 52 is displayed within the virtual environment 6 in the area where the risk of collision arises. Moreover, the position of the second image 52 in the virtual environment 6 is based on the field of vision 22 of the user 2, so that it does not interfere with another important or preferred element.

In addition to the position, the second image 52 comprises a change in the brightness, colour, luminosity, contrast and/or saturation, in such a way that said visual parameters of the second image 52 may be modified so as to emphasize the importance or improve the clarity of the content of the information displayed. Moreover, displaying the second image 52 comprises defining a dimension according to the priority level of the critical driving situation determined.

In a first embodiment of the method of the invention, a position of the second image 52 changes as a function of the field of vision 22 of the user 2. Thus, said second image 52 does not occupy a fixed position in the environment, such as a position occupied by a screen of the vehicle 1 or a rear view mirror of the vehicle 1, but the second image 52 moves in line with a change in the field of vision 22 of the user 2 determined. For example, if the user 2 is looking backwards or to the side because he is speaking to another passenger, or is simply distracted, an image from a second camera 14 that is focused forwards may be displayed, if it is considered that there is a risk of collision with the vehicle 1 in front. On the other hand, if in said driving situation the user 2 is already looking forwards, it will not be necessary to show him this information from the second camera 14 that is focused forwards.

Figure 6B shows, by way of illustration, a perspective view of the virtual environment 6 seen by the driver in the passenger compartment of a vehicle 1 through the virtual reality device 3, following a first turn of the head 21 to the right. The second image 52 displayed in the virtual environment 6 has moved to the right in line with the change in the field of vision 22, with respect to the first position that it occupied in Figure 6A. Said Figure 6B includes the same elements as mentioned for Figure 6A.

Figure 6C shows, by way of illustration, the same view as in Figures 6A and 6B, in which the user 2 has made a second turn of his head 21 to the right, greater than the first turn. The second image 52 displayed in the virtual environment 6 has moved to the right in line with the change in the field of vision 22, with respect to the second position that it occupied in Figure 6B.

In Figure 6C, the superposition of the second image 52 on the first image 51 is performed also on the basis of the classification of the at least one first segment 511 of the first image. Thus, it is determined that the second image 52, moved in line with the change in the field of vision 22, would be superposed partially with elements of the interior 11 of the passenger compartment. In generating the virtual environment 6 it is determined that the priority level of the second segments 521 of the second image 52 is higher than the priority level of the first segments 511 classified as pertaining to the interior 11 of the vehicle 1. As a result, the second segments 521 are superposed on the first segments 511 classified as pertaining to the interior 11 of the vehicle 1. Even so, said second image 52 may be displayed transparently, to avoid totally hiding this previously defined content.

Figure 6D shows, by way of illustration, the same view as in Figures 6A, 6B and 6C, in which the user 2 has made a third turn of his head 21 to the right, greater than the second turn. The second image 52 displayed in the virtual environment 6 has moved to the right in line with the change in the field of vision 22, with respect to the second position that it occupied in Figure 6C.

Moreover, when generating the virtual environment 6 it is determined that the priority level of the first segments 511 classified as pertaining to outside 12 the vehicle is greater than the priority level of the second segments 521 of the second image 52. It is also determined that the priority level of the second segments 521 of the second image 52 is higher than the priority level of the first segments 511 classified as pertaining to the interior 11 of the vehicle 1. Therefore, the second image 52 displayed in the virtual environment 6 has moved to the right in line with the change in the field of vision 22, but has also moved downwards, so that the window zone 15 is not superposed by the second image 52. The user is thus not prevented from seeing outside 12 the vehicle 1, which would be critical for driving the vehicle 1. Moreover, the second image 52 is displayed transparently, to avoid totally hiding the first segments 511 classified as pertaining to the interior 11 of the vehicle 1.

According to this first embodiment, the second image 52 will move in the virtual environment 6 so that the second segments 521 of the second image 52 become superposed on successive first segments 511 pertaining to the interior 11 of the vehicle 1. Moreover, superposition of second segments 521 of the second image 52 on first segments 511 pertaining to outside 12 the vehicle 1 is avoided.

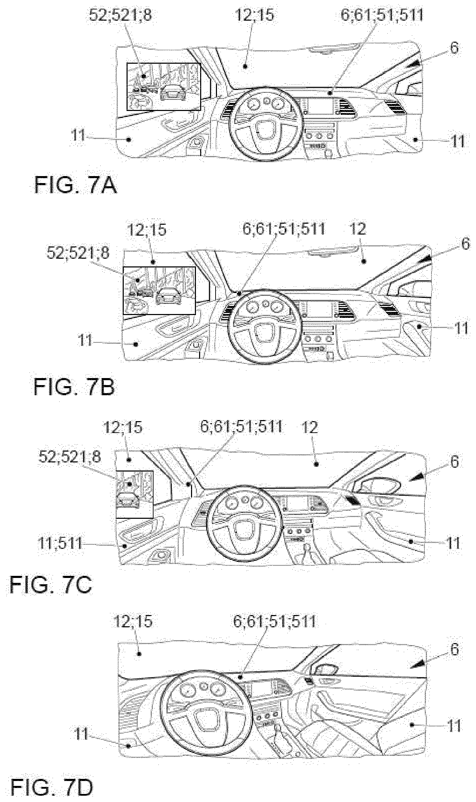

Likewise, Figures 7A, 7B, 7C and 7D show a second embodiment relating to the strategy for generating the virtual environment 6. According to this second embodiment, the second image 52 occupies a fixed area in the virtual environment 6, so that a change in the field of vision 22 of the user 2 determined does not affect the position of the second image 52 in the virtual environment 6. Thus, when the user 2 is looking at this specific area, he can see the second image 52. If not, if the field of vision 22 of the user 2 does not coincide with the second image 52, the user 2 will not see the second image 52.

Figure 7A is equivalent to Figure 6A, in which a critical driving situation has been determined as the vehicle 1 has encroached on a lane to the left, with a third vehicle travelling in this left-hand lane. Therefore, the second image 52 is displayed in the virtual environment 6 so that the user 2 receives priority information on the critical driving situation. In this case, the second image 52 shows an external image 8 of the vehicle 1, in particular what would be seen in a rear view mirror.

Figure 7B shows, by way of illustration, the same view as in Figure 7A in which the user 2 has made a first turn of his head 21 to the right. As can be seen, the field of vision 22 of the user 2 has changed. However, the relative position of the second image 52 with respect to elements of the vehicle, such as components of the vehicle interior 11, remains the same.

Figure 7C shows, by way of illustration, the same view as in Figures 7A and 7B, in which the user 2 has made a second turn of his head 21 to the right, greater than the first turn. As can be seen, the field of vision 22 of the user 2 has changed. However, the position of the second image 52 remains fixed in the virtual environment 6, partially disappearing from the field of vision of the user, according to the present invention.

Figure 7D shows, by way of illustration, the same view as in Figures 7A, 7B and 7C, after a third turn of the head 21 to the right, greater than the second turn. Again, the field of vision 22 of the user 2 has changed. However, the second image 52 remains fixed in a position that is approximately the position that a rear view mirror of the vehicle 1 would have. As a result, the second image 52 has completely disappeared from the field of vision 22 of the user 2. It can be seen that, when the area of space where the second image 52 is disappears from the field of vision 22, the second image 52 is no longer displayed in the virtual environment 6.

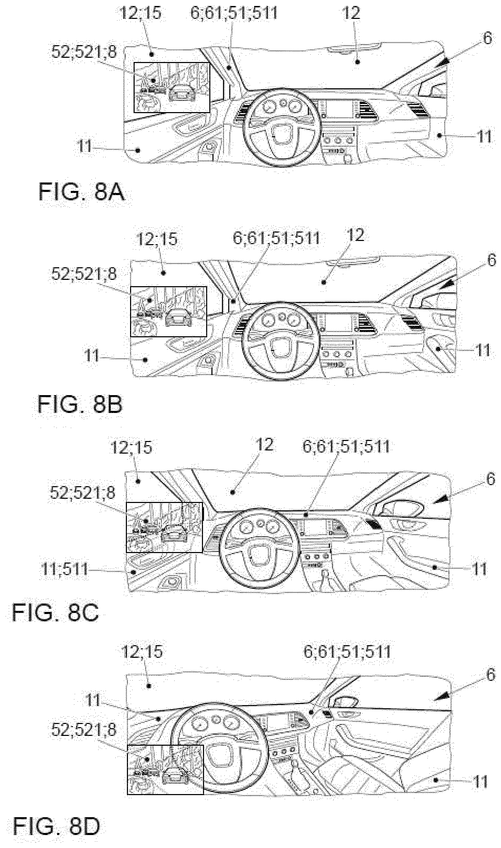

Likewise, Figures 8A, 8B, 8C and 8D show a third embodiment relating to the strategy for generating a virtual environment 6. Said third embodiment is based on a combination of the first embodiment and the second embodiment. According to said third embodiment, the second image 52 occupies a fixed area in the virtual environment 6, so that a change in the field of vision 22 of the user 2 determined does not affect the position of the second image 52 in the virtual environment 6. Said fixed area is respected while the second image 52 is within the field of vision 22 of the user 2. Thus, if the field of vision 22 of the user 2 changes and the second image disappears, at least partially, from the field of vision 22 of the user 2, the second image 52 is displayed in line with the change in the field of vision 22 of the user 2.

Figure 8A is equivalent to Figures 6A and 7A, in which a critical driving situation has been determined as the vehicle 1 has encroached on a lane to the left, with a third vehicle travelling in this left-hand lane. Therefore, the second image 52 is displayed in the virtual environment 6 so that the user 2 receives priority information on the critical driving situation. In this case, the second image 52 shows an external image 8 of the vehicle 1, in particular what would be seen in a rear view mirror.

Figure 8B shows, by way of illustration, the same view as in Figure 8A in which the user 2 has made a first turn of his head 21 to the right. As can be seen, the field of vision 22 of the user 2 has changed. However, the relative position of the second image 52 with respect to elements of the vehicle, such as components of the vehicle interior 11, remains the same.

Figure 8C shows, by way of illustration, the same view as in Figures 8A and 8B, in which the user 2 has made a second turn of his head 21 to the right, greater than the first turn. The second image 52 displayed in the virtual environment 6 has moved to the right in line with the change in the field of vision 22, with respect to the second position which it occupied in Figure 8B.

In Figure 8C, the superposition of the second image 52 on the first image 51 is performed also on the basis of the classification of the at least one first segment 511 of the first image. Thus, it is determined that the second image 52, moved in line with the change in the field of vision 22, would be superposed partially with elements of the interior 11 of the passenger compartment. In generating the virtual environment 6 it is determined that the priority level of the second segments 521 of the second image 52 is higher than the priority level of the first segments 511 classified as pertaining to the interior 11 of the vehicle 1. As a result, the second segments 521 are superposed on the first segments 511 classified as pertaining to the interior 11 of the vehicle 1. Even so, said second image 52 may be displayed transparently, to avoid totally hiding this previously defined content.

Figure 8D shows, by way of illustration, the same view as in Figures 8A, 8B and 8C, in which the user 2 has made a third turn of his head 21 to the right, greater than the second turn. The second image 52 displayed in the virtual environment 6 has moved to the right in line with the change in the field of vision 22, with respect to the second position which it occupied in Figure 6C. As in Figure 8C, as the superposition of the second image 52 is confronted with important elements of the vehicle 1 present in the field of vision 22 of the user 2, the second image 52 may be made transparent and moved, as explained in relation to Figures 6C and 6D.

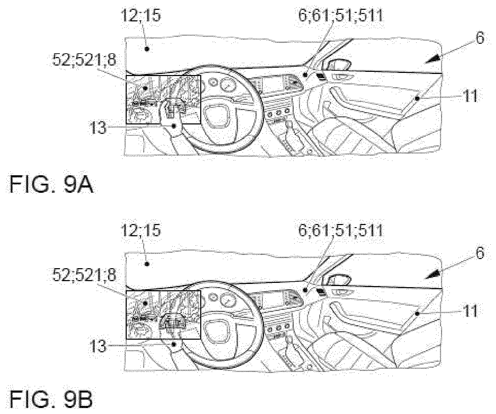

Figure 9A shows, by way of illustration, a perspective view of the virtual environment 6 seen by the driver in the passenger compartment of a vehicle 1 through the virtual reality device 3, with a second image 52 superposed on at least one area of the first image 51 and with additional objects 13 of the vehicle 1 superposed on the second image 52, according to the present invention.

Preferably, by dividing the field of vision 22 into layers, the images 51, 52 are displayed, preferably, as pixels of the interior 11 of the passenger compartment, avoiding superposition of the second image 52 on pixels pertaining to the area outside 12 the vehicle 1, since this would reduce visibility for the user 2. Only in an extreme emergency would it be decided to display the second image 52 by superposing it on pixels pertaining to the area outside 12 the vehicle 1.

In generating the virtual environment 6 shown in Figure 9A, it is determined that the priority level of the second segments 521 of the second image 52 is higher than the priority level of the first segments 511 classified as pertaining to the interior 11 of the vehicle 1. As a result, the second segments 521 are superposed on the first segments 511 classified as pertaining to the interior 11 of the vehicle 1. Even so, said second image 52 may be displayed transparently, to avoid totally hiding this previously defined content. Furthermore, it is determined that the priority level of the first segments 511 classified as pertaining to the area outside 12 the vehicle 1 is higher than the priority level of the second segments 521 of the second image 52, so that superposition of the second segments 521 on the first segments 511 classified as pertaining to the area outside 12 the vehicle 1 is avoided. Furthermore, it is determined that the priority level of the first segments 511 classified as pertaining to an additional object 13 of the vehicle 1 is higher than the priority level of the second segments 521 of the second image 52, so that the first segments 511 classified as pertaining to an additional object 13 of the vehicle 1 are superposed on the second segments 521 on the first segments 511 classified as pertaining to the area outside 12 the vehicle 1. For example, the need to superpose, in this case, the hand and arm of the user 2, classified as an additional object 13 of the vehicle, may be based on determining a movement or change of position of the additional object 13 of the vehicle 1, so as to determine the importance of displaying said additional object 13 of the vehicle 1 in the virtual environment.

In this case, the position of the second image 52 displayed has to be moved, or said second image 52 made transparent, so that the user 2 can interact with the vehicle 1 properly, i.e. by seeing what he is touching. Safety of driving is thereby improved.

To be specific, to give an example of a risk table, with a risk deemed to be high, the second image 52 is superposed on the layer pertaining to the interior 11, outside 12 and additional objects 13. With a risk deemed to be moderate, the second image 52 is superposed on the layer pertaining to the interior 11 and outside 12. With a risk deemed to be low, the second image 52 is superposed only on the layer pertaining to the interior 11.

Figure 9B shows the same view as Figure 9A. In this case, the second image 52 is superposed on the additional objects 13 of the vehicle 1, changing at least one visual property of the second image 52, such as the transparency of the second image 52, so that at least one additional object 13 of the vehicle 1 is partially visible.

In a preferred embodiment, it is possible to combine the display of images 51, 52, other augmented reality images or additional information. For example, by indicating in a different colour the third vehicle with which there is a risk of collision, displaying in more intense colours the lines of the lane into which the vehicle is encroaching, or indicating the gap in metres to the vehicle 1 in front.

The details, shapes, dimensions and other accessory aspects, and the components used in the implementation of the method and system for displaying priority information in a vehicle, may be substituted as appropriate by others which are technically equivalent, without departing from the essence of the invention or the scope defined by the claims included after the following list.

### List of reference signs:

- 1: vehicle
- 11: interior
- 12: outside
- 13: additional object
- 14: second camera
- 15: window zone
- 2: user
- 21: head
- 22: field of vision
- 23: real vector
- 24: theoretical vector
- 3: virtual reality device
- 31: first camera
- 32: sensor
- 34: accelerometer
- 35: gyroscope
- 36: third camera
- 37: screen
- 4: processing unit
- 41: memory unit
- 51: first image
- 511: first segment
- 52: second image
- 521: second segment
- 6: virtual environment
- 61: virtual segment
- 7: position detection means
- 8: external image
- 9: distance sensor

## Claims

1. Method for displaying priority information in a vehicle (1), in which a virtual reality device (3) is used by a user (2) in the interior (11) of the vehicle (1), in which the method comprises the following steps:
i) capturing at least one first image (51) of an environment of the user (2), in which the at least one first image (51) captured coincides with a field of vision (22) of the user (2),
ii) obtaining an item of information on an environment of the vehicle (1),
iii) determining a critical driving situation on the basis of the information obtained on the environment of the vehicle (1),
iv) capturing at least one second image (52) of the environment of the vehicle (1),
v) generating a virtual environment (6) of the user (2), in which the virtual environment (6) comprises the at least one first image (51) captured and the at least one second image (52) captured, in which the virtual environment (6) generated is based on the critical driving situation determined, and
vi) displaying the virtual environment (6) generated by means of the virtual reality device (3).

2. Method according to Claim 1, **characterized in that** the step of generating a virtual environment (6) comprises superposing the at least one second image (52) on the at least one first image (51).

3. Method according to any of the preceding claims, **characterized in that** the step of generating a virtual environment (6) comprises changing a colour, brightness, luminosity, contrast and/or saturation of the at least one second image (52).

4. Method according to any of the preceding claims, **characterized in that** the step of generating a virtual environment (6) comprises changing a colour, brightness, luminosity, contrast and/or saturation of the at least one first image (51).

5. Method according to any of the preceding claims, **characterized in that** the step of generating a virtual environment (6) comprises defining a dimension of the at least one second image (52).

6. Method according to any of the preceding claims, **characterized in that** the step of generating a virtual environment (6) comprises incorporating at least one item of additional virtual information, in which the additional virtual information is incorporated into the at least one first image (51) and/or into the at least one second image (52).

7. Method according to any of the preceding claims, **characterized in that** it comprises a step of determining the field of vision (22) of the user (2), in which the step of generating a virtual environment (6) comprises establishing a position of the at least one second image (52) in the virtual environment (6) based on the field of vision (22) of the user (2) determined.

8. Method according to Claim 7, **characterized in that** establishing the position of the at least one second image (52) comprises moving the position of the second image (52) in the virtual environment (6) in line with a change in the field of vision (22) of the user (2) determined.

9. Method according to either of Claims 7 or 8, **characterized in that** establishing the position of the at least one second image (52) comprises keeping the position of the at least one second image (52) fixed in the virtual environment (6).

10. Method according to any of the preceding claims, **characterized in that** the at least one first image (51) comprises at least one first segment (511), in which the method comprises a step of classifying the at least one first segment (511) of the at least one first image (51) as pertaining to:
- the interior (11) of the vehicle (1),
- the area outside (12) the vehicle (1), and
- an additional object (13) of the vehicle (1).

11. Method according to Claim 10, **characterized in that** the step of generating a virtual environment (6) of the user (2) is also based on the classification of the at least one first segment (511) of the at least one first image (51).

12. Method according to Claim 11, **characterized in that** the at least one second image (52) comprises at least one second segment (521), in which the step of superposing the at least one second image (52) on the at least one first image (51) comprises superposing the at least one second segment (521) of the second image (52) on the first segment (511) pertaining to the interior (11) of the vehicle and/or on the first segment (511) pertaining to the area outside (12) the vehicle (1) and/or on the first segment (511) pertaining to an additional object (13) of the vehicle (1).

13. Method according to Claim 11, **characterized in that** the step of moving the position of the second image (52) in the virtual environment (6) comprises superposing the at least one second segment (521) of the second image (52) on successive first segments (511) pertaining to the interior (11) of the vehicle and/or on successive first segments (511) pertaining to the area outside (12) the vehicle (1) and/or on successive first segments (511) pertaining to an additional object (13) of the vehicle (1).

14. System for displaying virtual reality information in a vehicle (1), in which the system comprises:
- a virtual reality device (3), in which the virtual reality device (3) comprises at least one screen (37),
- at least one first camera (31), in which the at least one first camera (31) is configured to capture at least one first image (51), in which the at least one first image (51) coincides with a field of vision (22) of the user (2),
- at least one sensor means, in which the at least one sensor means is configured to obtain information on an environment of the vehicle (1), and
- at least one second camera (14), in which the at least one second camera (14) is configured to capture at least one second image (52) of an environment of the vehicle (1),
- at least one processing unit (4), in which the at least one processing unit (4) is configured to determine a critical driving situation based on the information on the environment of the vehicle (1), and to generate a virtual environment (6) of the user (2), in which the virtual environment (6) comprises the at least one first image (51) captured and the at least one second image (52) captured, in which the virtual environment (6) generated is based on the critical driving situation determined.

15. System according to Claim 14, **characterized in that** it comprises at least one position detection means (7), in which the position detection means (7) is configured to determine a position of the virtual reality device (3) in the vehicle (1).
